# FASCICULE DE BREVET EUROPEEN

(11) **EP 1 701 811 B1**
(45) Date de publication et mention de la délivrance du brevet: **27.02.2008**
(21) Numéro de dépôt: 04803899.6
(22) Date de dépôt: 15.12.2004
(51) Int. Cl.: B21D 39/02, B21D 53/88, B60T 13/567

(54) **PROCEDE D'ASSEMBLAGE D'UN SERVOMOTEUR PNEUMATIQUE**
VERFAHREN ZUR MONTAGE EINES PNEUMATISCHEN SERVOMOTORS
METHOD FOR ASSEMBLY OF A PNEUMATIC SERVO

(30) Priorité: 24.12.2003 FR 0315495
(43) Date de publication de la demande: 20.09.2006
(73) Titulaire: ROBERT BOSCH GMBH, 70442 Stuttgart (DE)
(72) Inventeur: SIMON BACARDIT, Juan, E-08013 Barcelona (ES)
(74) Mandataire: Hurwic, Aleksander Wiktor
(86) Numéro de dépôt international: PCT/EP2004/014280
(87) Numéro de publication internationale: WO 2005/070584

(56) Documents cités:
- DE-A- 2 704 632
- FR-A- 1 326 655
- GB-A- 2 082 275
- GB-A- 2 166 410
- US-A- 5 107 579

## Description

L'invention se rapporte à un dispositif d'assemblage d'un servomoteur pneumatique d'un dispositif de freinage de véhicule automobile. Plus précisément, l'invention se rapporte à un dispositif permettant de solidariser un couvercle et un cylindre d'un servomoteur pneumatique. L'invention se rapporte également à un procédé permettant d'assembler le cylindre et le couvercle par utilisation du dispositif de l'invention.

Un but de l'invention est de fournir un servomoteur pouvant être utilisé dans un dispositif de freinage de façon sûre. Un autre but de l'invention est d'empêcher un désassemblage du servomoteur au cour de son utilisation, quelque soit une épaisseur d'une tôle formant le servomoteur. Grâce à l'invention on peut obtenir un servomoteur dont un poids est faible, sans que sa solidité soit affectée.

Dans un dispositif de freinage pour véhicule automobile, un servomoteur peut être monté entre une commande de frein et un maître cylindre. Le servomoteur pneumatique a pour rôle d'amplifier un effort à la commande de frein, afin qu'une pression hydraulique dans le maître cylindre soit plus importante.

Un servomoteur peut être muni d'un boîtier de forme générale cylindrique. Le boîtier est formé d'un cylindre et d'un couvercle. Le cylindre et le couvercle sont solidarisés l'un à l'autre. Dans un volume interne du boîtier sont ménagées une chambre avant et une chambre arrière. La chambre avant est dirigée vers le maître cylindre, et a un volume variable. La chambre arrière, également à volume variable, est dirigée vers la commande de frein. La chambre avant est séparée de la chambre arrière par une cloison mobile. La cloison mobile est formée par une membrane étanche et souple et par une plaque jupe rigide. La chambre avant est reliée pneumatiquement à une source de vide. La chambre arrière est reliée pneumatiquement, de manière contrôlée par une valve, à une source de fluide propulseur. Une commande de frein actionne une tige de commande du servomoteur. L'actionnement de la tige commande l'ouverture de la valve et une entrée de fluide dans la chambre arrière. Le changement de pression qui en résulte entraîne un déplacement de la plaque jupe rigide.

Lors d'un freinage, des forces d'arrachement s'exerçant à l'endroit du servomoteur sont très importantes. En effet, les chambres du servomoteur sont soumises à des changements de pression brusques. Notamment, lors d'un freinage, de l'air est admis dans la chambre arrière. Cette admission d'air propulse la cloison mobile en direction de la chambre avant. Le boîtier du servomoteur étant fait de deux pièces à l'origine indépendantes, il est indispensable de bien solidariser ces deux pièces. Il faut donc que le contact entre le couvercle et le cylindre, soit suffisant pour que lors d'un freinage et plus précisément lors de la propulsion de la plaque jupe, le cylindre ne se trouve pas arraché du couvercle.

Afin d'assurer une bonne fixation du couvercle sur le cylindre, on procède actuellement à un sertissage ponctuel sur une périphérie externe des parois du couvercle et du cylindre. Par sertissage ponctuel, on entend sertissage en des points localisés. Afin de bien maintenir le cylindre sur le couvercle, on répartit régulièrement ces points de sertissage sur toute la périphérie externe du boîtier (voir par exemple FR-A 1 326 655). Jusqu'à présent, un tel assemblage était suffisant.

Cependant, depuis quelques temps, on cherche à diminuer un poids du servomoteur. En effet, le servomoteur et plus précisément le boîtier du servomoteur, est formé de parois en tôle. Une épaisseur de la tôle et une forme du servomoteur jouent donc sur son poids. On cherche notamment à diminuer le poids du servomoteur en réduisant l'épaisseur de la tôle formant le boîtier. L'épaisseur et la forme du servomoteur ont été modifiées de manière à obtenir un poids minimum. Par poids minimum on entend plus petit poids du servomoteur pour lequel on obtient une même rigidité et une même résistance à l'arrachement qu'un servomoteur classique.

Cependant, la résistance à la rupture à l'endroit de la liaison entre le couvercle et le cylindre est diminuée. Un sertissage ponctuel du couvercle avec le cylindre ne donne donc pas entière satisfaction lorsque l'épaisseur de la tôle est fortement diminuée.

Dans l'invention on cherche notamment à résoudre ce problème en fournissant un servomoteur dont une épaisseur et une forme peuvent être modifiées de manière à obtenir un poids minimum. Le servomoteur obtenu est tel qu'il présente une grande résistance à l'arrachement, y compris à l'endroit de la liaison entre le couvercle et le cylindre du boîtier.

Pour cela, l'invention propose un dispositif d'assemblage d'un servomoteur et plus précisément d'un couvercle et d'un cylindre d'un boîtier du servomoteur. Le dispositif d'assemblage de l'invention permet un sertissage continu, sur toute la périphérie externe du boîtier, du cylindre et du couvercle. Le sertissage continu permet d'obtenir un maintien fort des deux pièces l'une sur l'autre. La zone de contact offre une meilleure résistance aux forces d'arrachement.

Pour réaliser un tel sertissage continu, le dispositif de l'invention est muni d'au moins un jeu de rouleaux. Les rouleaux sont entraînés en rotation autour du servomoteur. Les rouleaux viennent au contact du servomoteur à l'endroit de la jonction entre le couvercle et le cylindre du boîtier. Les rouleaux plient lors de leur passage une extrémité d'une tôle formant la paroi du cylindre autour d'une extrémité d'une tôle formant la paroi du couvercle.

Dans un exemple particulier de réalisation de l'invention, le dispositif est muni de deux jeux de rouleaux différents. Le premier jeu de rouleaux permet un pliage de l'extrémité de la tôle formant la paroi du cylindre autour de l'extrémité de la tôle formant la paroi du couvercle, selon un premier angle. Le second jeu de rouleaux lui, permet de plier la tôle du cylindre selon un second angle plus aigu que le premier. Un rouleau du deuxième jeu de rouleaux n'est appliqué contre la paroi externe du boîtier qu'après le passage préalable d'un rouleau du premier jeu de rouleaux.

Ainsi, les rouleaux du premier jeu de rouleaux commencent à plier la tôle du cylindre. Le premier pliage permet de plier, à partir d'une position initiale parallèle à un axe de rotation du dispositif, la tôle de trente à soixante degrés. La tôle est ainsi partiellement rentrée en direction d'un centre du servomoteur. Une position initiale de l'extrémité de la paroi du couvercle est perpendiculaire à l'extrémité de la paroi du cylindre. Par position initiale, on entend position dans laquelle le couvercle et le cylindre sont disposés l'un sur l'autre, mais non fixés l'un à l'autre. A la fin du passage d'au moins un rouleaux du premier jeu de rouleau, la tôle du cylindre est repliée en direction de la tôle du couvercle, qu'elle sertit légèrement. Un rouleau du deuxième jeu de rouleaux est alors appliqué contre la tôle du boîtier, à l'endroit du passage du premier rouleau, afin de replier d'avantage la tôle du cylindre contre la tôle du couvercle. Idéalement, la tôle du cylindre est pliée à quatre-vingt-dix degrés à la fin du passage des rouleaux du deuxième jeu de rouleaux.

Les jeux de rouleaux du dispositif de l'invention sont, par exemple, munis de trois rouleaux chacun. Les rouleaux du premier jeu sont alternés avec les rouleaux du deuxième jeu. Pour un dispositif d'assemblage de forme générale cylindrique circulaire, les rouleaux sont repartis régulièrement sur tout un périmètre du dispositif. Ainsi par exemple, un rouleau du premier jeu est séparé de 120° d'un autre rouleau du premier jeu. Un rouleau du premier jeu est séparé de 60° d'un rouleau du deuxième jeu.

Afin que le sertissage se fasse en deux étapes successives, il est nécessaire que les rouleaux du deuxième jeu ne soient appliqués contre la paroi du boîtier qu'à des endroits où les rouleaux du premier jeu sont déjà passés. Pour cela en plus d'un mouvement de rotation des rouleaux autour du servomoteur, on impose à chacun des rouleaux un déplacement radial alternatif par rapport au servomoteur. Un tel mouvement oscillant est permis par un mécanisme excentrique du dispositif d'assemblage. Les rouleaux des deux jeux sont en déphasage angulaire les uns des autres. Les rouleaux d'un même jeux sont par contre en phase angulaire. Ainsi, on rapproche alternativement les rouleaux du premier jeu puis les rouleaux du deuxième jeu, vers un centre du servomoteur. On peut ainsi obtenir un sertissage continu du boîtier du servomoteur en un ou plusieurs tours complets des rouleaux autour du servomoteur.

L'invention propose également un procédé d'assemblage du boîtier du servomoteur. Le procédé de l'invention permet de sertir le couvercle et le cylindre du boîtier de façon continue sur tout un périmètre externe du boîtier.

L'invention a donc pour objet un servomoteur pneumatique pour dispositif de freinage de véhicule automobile, caractérisé en ce qu'un couvercle et un cylindre dudit servomoteur sont fixés l'un à l'autre sur tout un contour externe.

L'invention a également pour objet un dispositif d'assemblage d'un servomoteur pneumatique, comprenant
- un support fixe cylindrique dont un volume interne est supérieur à un volume d'un couvercle du servomoteur, le couvercle étant logé dans le support,
- un chapeau cylindrique dont un volume interne est supérieur à un volume d'un cylindre du servomoteur, ledit chapeau imposant une charge axiale au cylindre,
- au moins un jeu de rouleaux, entraînés en rotation par un moteur, les rouleaux tournant au moins partiellement autour du support.
   L'invention a aussi pour objet un procédé de sertissage d'un servomoteur comprenant les étapes
- on introduit un couvercle d'un servomoteur dans un support d'un dispositif de sertissage, une extrémité haute d'une paroi du couvercle reposant sur une extrémité haute d'une paroi interne du support,
- on dispose un cylindre du servomoteur sur le couvercle, une extrémité basse d'une paroi du cylindre reposant sur l'extrémité haute de la paroi du couvercle,
- on dispose un chapeau du dispositif de sertissage sur le support, une extrémité basse du chapeau compressant l'extrémité basse de la paroi du cylindre sur l'extrémité haute de la paroi du couvercle,
- on actionne un moteur,
- on fait tourner autour du servomoteur, par l'intermédiaire du moteur, des rouleaux de sertissage,
- on sertit de façon continue l'extrémité basse de la paroi du cylindre sur l'extrémité haute de la paroi du couvercle.

L'invention sera mieux comprise à la lecture de la description qui suit et à l'examen des figures qui l'accompagnent. Celles-ci ne sont présentées qu'à titre indicatif et nullement limitatif de l'invention. Les figures représentent :
- Figure 1 : Une coupe longitudinale d'un servomoteur logé dans un dispositif d'assemblage de l'invention ;
- Figure 2 (a et b) : Un agrandissement de la figure 1 à l'endroit d'une liaison entre un couvercle et un cylindre du servomoteur, et d'un rouleau de l'invention ;
- Figure 3 : Une coupe transversale d'un dispositif d'assemblage de l'invention.

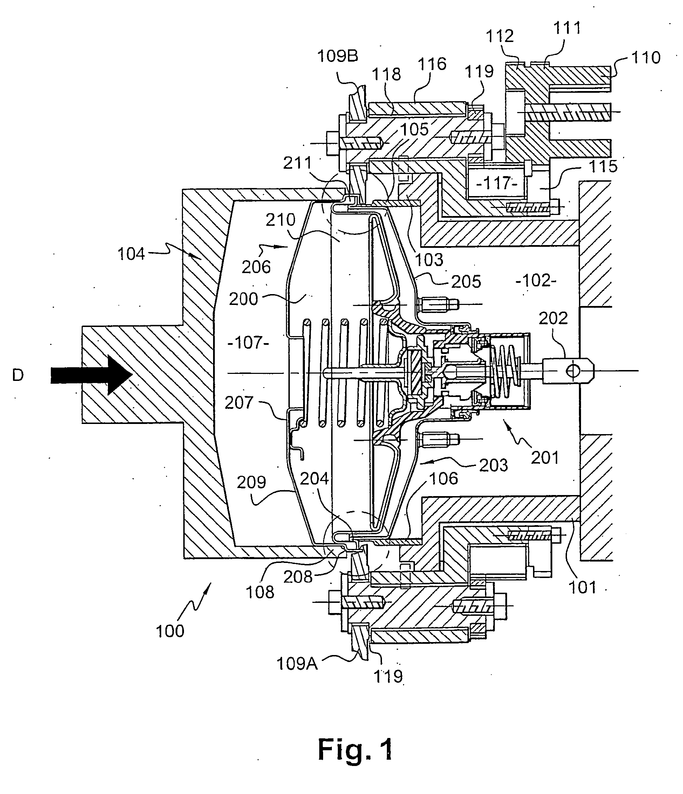

Sur la figure 1, on peut voire un exemple de réalisation d'un dispositif 100 d'assemblage d'un servomoteur 200. Le dispositif 100 est muni d'un support 101 fixe. Dans l'exemple représenté à la figure 1, le support 101 a une forme générale cylindrique. Un volume interne 102 du support 101 est tel qu'il permet d'y introduire une partie arrière 201 du servomoteur 200. Par partie arrière 201 du servomoteur 200, on entend tige de commande 202 et couvercle 203 du servomoteur 200. Le couvercle 203 a également une forme générale cylindrique.

Une extrémité 204 d'une paroi 205 formant le couvercle 203 repose sur une extrémité haute 105 d'un centreur 106. Le centreur 106 a par exemple une forme générale en anneau. Un diamètre de l'anneau 106 est approximativement égale à un diamètre interne du support 101 à l'endroit d'une extrémité haute 103 du support 101. Ainsi, on dispose le centreur 106 dans un périmètre interne du support 101 à l'endroit d'une extrémité haute 103. Le centreur 106 permet d'assurer une bonne position au couvercle 203. Par bonne position du couvercle 203 dans le support 101, on entend position permettant au dispositif 100 de réaliser un assemblage du servomoteur 200.

Dans un autre exemple de réalisation, on peut prévoir que le centreur 106 est composé d'au moins deux pièces distinctes. Ainsi, le centreur 106 ne suit pas entièrement le contour interne du support 101. Il peut être disposé de manière régulière, en différents points sur le diamètre interne du support 101. Les différents éléments formant le centreur 106, permettent ainsi de supporter ponctuellement et de centrer le couvercle 203. Dans un autre exemple de réalisation, il est également possible de n'utiliser aucun centreur 106. Le couvercle 203 repose alors directement sur le support 101, à l'endroit de l'extrémité haute 103 dudit support 101.

Une fois le couvercle 203 disposé à l'intérieur 102 du support 101, on dispose un cylindre 206 du servomoteur 200. Le cylindre 206 forme une partie avant du servomoteur 200. Le cylindre 206 a une forme générale cylindrique. On dispose le cylindre. 206 sur le couvercle 203 de telle manière qu'une extrémité 208 d'une paroi 209 formant le cylindre 206 repose sur l'extrémité 204 du couvercle 203. Dans l'exemple représenté sur la figure 1, une extrémité 211 d'une membrane 210 d'étanchéité du servomoteur 200 formé un bourrelet 211. Le bourrelet 211 est emprisonné entre les extrémités 204 et 208 respectivement du couvercle 203 et du cylindre 206. Le bourrelet 211 assure notamment une étanchéité à l'endroit du contact entre le couvercle 203 et le cylindre 206.

On dispose ensuite un chapeau 104 du dispositif d'assemblage 100 sur le support 101. Le chapeau 104 a une forme générale cylindrique. Un volume interne 107 du chapeau 104 est tel qu'il permet d'y loger le cylindre 206. Une première extrémité 108 du chapeau 104 est en appui contre l'extrémité 208 de la paroi 209 du cylindre 206. Par première extrémité, on entend dans la description, extrémité dirigée vers la gauche sur la figure. Inversement, par seconde extrémité, on entend dans la description, extrémité dirigée vers la droite sur la figure. On applique alors selon une direction D l'extrémité 108 du chapeau 104 sur l'extrémité 208 du cylindre 102. On impose ainsi une charge axiale à l'endroit de la liaison entre le couvercle 203 et le cylindre 206. Le bourrelet 211 se trouve compressé entre les deux parois 205 et 209 à l'endroit de leurs extrémités, respectivement 204 et 208.

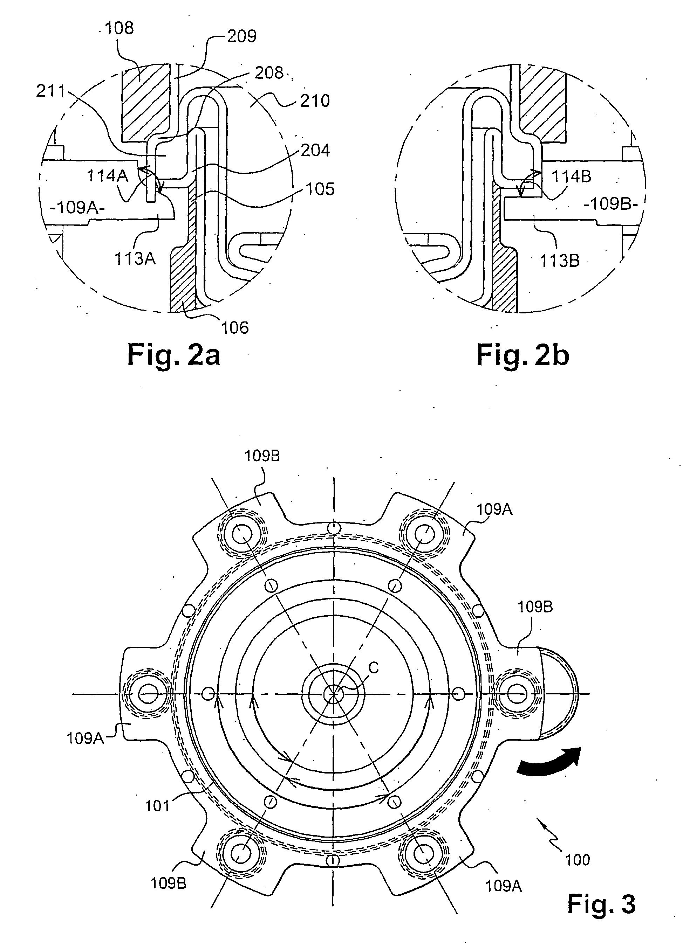

Sur un pourtour extérieur du support 101 sont disposés des rouleaux 109 (deux rouleaux visibles sur la figure 1). Sur la figure 3 on peut voire plus précisément la disposition des rouleau 109 du dispositif 100. Les rouleaux 109 sont au nombre de six. Des rouleaux 109A d'un premier jeu sont intercalés avec des rouleaux 109B d'un second jeu. Les rouleaux 109 sont disposés régulièrement surtout un pourtour du support 101.

Sur -la figure 1, on peut voir que les rouleaux sont au contact du servomoteur 200 à l'endroit de la liaison entre le couvercle 203 et le cylindre 206.

Sur les figures 2a et 2b, on peut voir deux agrandissements, respectivement un agrandissement de la figure 1 à l'endroit d'un contact entre un rouleau 109A et le servomoteur 200, et à l'endroit d'un contact entre un rouleau 109B et le servomoteur 200. Dans les deux cas, on peut voir que l'extrémité 204 du couvercle 203 repose sur l'extrémité supérieur 105 du centreur 106. De même, on aperçoit le bourrelet 211 de la membrane d'étanchéité 210, compressé entre l'extrémité 204 du couvercle 203 et l'extrémité 208 du cylindre 206. L'extrémité 208 du cylindre 206 est compressée par l'extrémité 108 du chapeau 104. L'extrémité 208 du cylindre 206 est approximativement parallèle à un axe de rotation du centreur 106. L'extrémité 204 du couvercle 203, elle, est perpendiculaire à l'extrémité 208. L'extrémité 208 se prolonge vers la droite sur la figure 2a au delà d'un point de contact avec l'extrémité 204.

Dans l'invention, on veut plier l'extrémité 208 autour de l'extrémité 204 et du bourrelet 211 de manière à ce que l'extrémité 208 se retrouve idéalement perpendiculaire à l'axe du centreur 106. On souhaite réaliser un tel pliage sur tout le pourtour du servomoteur 200.

Pour cela, comme cela est représenté à la figure 1, on munit le dispositif d'assemblage 100 d'un engrenage 110, entraînant en rotation les rouleaux 109 tout autour du servomoteur 200. L'engrenage est lui même entraîné en rotation par un moteur (non représenté). L'engrenage 110 est muni de deux roues 111 et 112 dentées. Les roues 111 et 112 ont un nombre de dents différents.

Par l'intermédiaire de la première roue 111, l'engrenage 110 entraîne en rotation l'ensemble des jeux de rouleaux 109A et 109B autour du servomoteur 200. La deuxième roue dentée 112 entraîne en rotation un excentrique 118 imposant aux rouleaux 109 un mouvement sinusoïdale périodique. Ainsi, par l'intermédiaire de cet excentrique 118, les rouleaux 109 ne sont pas appliqués de manière continue contre les parois 205 et 209 de servomoteur 200.

Lorsque le dispositif d'assemblage 100 est mis en route, les rouleaux 109 tournent de manière continue tout autour du servomoteur 200, et sont appliqués radialement contre les parois 205 et 209 du servomoteur 200 de manière discontinue périodique. Les jeux de rouleaux 109A et 109B ont un déphasage angulaire. Le déphasage angulaire est tel qu'il permet qu'une application des rouleaux 109A contre la paroi du servomoteur 200 s'alterne avec une application des rouleaux 109B.

Afin d'avoir un bon sertissage, on souhaite appliquer les rouleaux 109A radialement contre le servomoteur 200 avant les rouleaux 109B. En effet, les rouleaux 109A et 109B diffèrent les uns des autres du fait de leurs angles d'attaque. Sur les figures 2 a et 2 b, on peut voir que les rouleaux 109A et 109B sont tous munis respectivement d'un chanfrein 113A et 113B. Une coupe en biseau formant les chanfreins 113A et 113B est ménagée sur une face supérieure dés rouleaux 109A et 109B. Une forme des chanfreins 113A et 113B est différente. En effet, un angle d'attaque 114A du chanfrein 113A est supérieur à un angle d'attaque 114B du chanfrein 113b. Par angle d'attaque, on entend angle formé par la coupe en biseau des chanfreins 113.

Un premier contact entre le rouleau 109A est l'extrémité 208 de la paroi 209 du cylindre 206 permet de replier légèrement l'extrémité 208 en direction d'un axe C du support 101. Le rouleau 109B est ensuite appliqué contre l'extrémité 208 déjà partiellement repliée. L'angle d'attaque 114B étant inférieur à l'angle d'attaque 114A, il permet de plier, un peu plus l'extrémité 208 en direction de l'àxe C.

Par exemple, l'angle d'attaque 114a est compris entre 115° et 135°. L'angle d'attaque 114B est lui compris entre 80° et 90°. Dans un exemple préféré, l'angle d'attaque 114A est de 120°. Ainsi, l'extrémité 208 est repliée lors du passage du rouleau 109A de 60°. Puis, lors du passage du rouleau 109B, l'extrémité 208 est pliée de 25° supplémentaires. Au final, l'extrémité 208 se retrouve quasiment perpendiculaire à l'axe du centreur, 106. L'extrémité 208 sertit l'extrémité 204 en emprisonnant le bourrelet 211.

Dans l'invention, un tel sertissage est réalisé sur tout un pourtour du servomoteur 200. Le dispositif 100 réalise autant de tours autour du servomoteur 200 que nécessaire pour que le cylindre 206 soit fixé au couvercle 203.

Sur la figure 1 est représenté un exemple particulier de réalisation du dispositif permettant d'entraîner en rotation les rouleaux 109 et de leur fournir un mouvement oscillant radialement par rapport à un axe C du support 101.

La roue 111 de l'engrenage 110 entraîne en rotation un pignon 115. Un corps 116 est fixé au pignon 115. Le corps 116 est donc entraîné en rotation par la rotation de la roue 111. Le corps 116 est ainsi entraîné en rotation tout autour du support 101. La roue 112 de l'engrenage 110 entraîne en rotation un pignon 117. Le pignon 117 est fixé libre en rotation au corps 116. Ainsi, le pignon 117 tourne indépendamment du corps 116. Les rotations du corps 116 et du pignon 117 dépendent respectivement de la rotation de la roue 111 et de la roue 112 de l'engrenage 110. Un nombre de dents de la roue 111 est différent d'un nombre de dents de la roue 112. Le corps 116 et le pignon 117 ne tournent donc pas à une même vitesse. Le pignon 117 entraîne en rotation l'excentrique 118 par l'intermédiaire d'un pignon 119. L'excentrique 118 suit au moins partiellement un pourtour interne du corps 116.

Les rouleaux 109 sont montés sur une extrémité supérieure de l'excentrique 118. L'excentrique 118 est fixé au corps 116. Les rouleaux 109 sont donc entraînés en rotation tout autours du servomoteur 200. Mais l'excentrique 118 étant également au contact du pignon 117, le pignon 117 impose un mouvement oscillatoire radiale par rapport à l'axe C du support 101 à l'excentrique 118 et aux rouleaux 109.

On obtient ainsi, en plus d'un mouvement de rotation de l'ensemble des rouleaux -109 autour du servomoteur 200, un mouvement oscillatoire radiale de chacun des rouleaux 109 par rapport à l'axe C du support 101. Les rouleaux 109 sont donc de manière périodique appliqués contre la paroi du servomoteur 200, puis éloignés de lui. Le déphasage angulaire entre les rouleaux 109A et les rouleaux 109B permet d'appliquer en premier les rouleaux 109A contre la paroi du servomoteur 200. Les rouleaux 109B ne sont appliqués qu'après passage des rouleaux 109B.

## Revendications

1. Dispositif (100) d'assemblage d'un servomoteur (200) pneumatique, comprenant
- un support (101) fixe cylindrique dont un volume interne (102) est supérieur à un volume d'un couvercle (203) du servomoteur, le couvercle étant logé dans le support,
- un chapeau (104) cylindrique dont un volume interne (107) est supérieur à un volume d'un cylindre (206) du servomoteur, ledit chapeau imposant une charge axiale au cylindre,
**caractérisé en ce qu'**il comprend
- au moins un jeu de rouleaux (109A, 109B), entraînés en rotation par un moteur, les rouleaux tournant au moins partiellement autour du support

2. Dispositif selon la revendication 1, **caractérisé en ce qu'**il est muni d'un premier jeu de rouleaux (109A) et d'un deuxième jeu de rouleaux (109B), les deux jeux de rouleaux tournant au moins partiellement autour du support.

3. Dispositif selon les revendications 1 ou 2, **caractérisé en ce qu'**il est muni d'un centreur (106) reposant sur une extrémité supérieure (103) du support fixe, le couvercle reposant sur le centreur, le centreur ayant une forme en anneau, un diamètre intérieur du centreur étant approximativement égal à un diamètre du couvercle du servomoteur.

4. Dispositif selon l'une des revendications 2 à 3, **caractérisé en ce que** les premiers et deuxièmes rouleaux sont alternés.

5. Dispositif selon l'une des revendications 2 à 4, **caractérisé en ce que** le premier jeu de rouleaux est muni de trois rouleaux, et **en ce que** le deuxième jeu de rouleaux est muni de trois rouleaux, les premiers rouleaux étant espacés les Uns des autres de 120°., et étant espacés des deuxièmes rouleaux de 60°.

6. Dispositif selon l'une des revendications 2 à 5, **caractérisé en ce que** les premiers rouleaux sont munis d'un chanfrein (113A), ledit chanfrein ayant un angle (114A) d'attaque compris entre 115 et 135°, et **en ce que** les deuxièmes rouleaux sont chacun munis d'un chanfrein (113B), ledit chanfrein ayant un angle (114B) d'attaque compris entre 80 et 90°.

7. Dispositif selon la revendication 6, **caractérisé en ce que** l'angle d'attaque des chanfreins des premiers rouleaux est de 120°, et **en ce que** l'angle d'attaque des chanfreins des deuxièmes rouleaux-est de 85°.

8. Dispositif selon l'une des revendications 2 à 7, **caractérisé en ce qu'**il est muni d'un engrenage (110) entraînant les rouleaux en rotations, et **en ce que** l'engrenage est muni de deux roues dentées, un nombre de dents d'une première roue (111) dentée de l'engrenage, entraînant en rotation les deux jeux de rouleaux autours du servomoteur, étant différent d'un nombre de dents d'une deuxième roue (112) dentée dudit engrenage, la deuxième roue imposant par l'intermédiaire d'un excentrique (118) un déplacement oscillant radial des rouleaux par rapport à un axe (C) du support.

9. Procédé de sertissage d'un servomoteur comprenant les étapes
- on introduit un couvercle (203) d'un servomoteur (200) dans un support (101) d'un dispositif (100) de sertissage, une extrémité haute (204) d'une paroi (205) du couvercle reposant sur une extrémité haute (103) d'une paroi interne du support,
- on dispose un cylindre (206) du servomoteur sur le couvercle, une extrémité basse (208) d'une paroi (209) du cylindre reposant sur l'extrémité haute de la paroi du couvercle,
- on dispose un chapeau (104) du dispositif de sertissage sur le support, une extrémité basse (108) du chapeau compressant l'extrémité basse de la paroi du cylindre sur l'extrémité haute de la paroi du couvercle,
**caractérisé en ce qu'**il comprend les étapes complémentaires suivantes
- on actionne un moteur,
- on fait tourner autour du servomoteur, par l'intermédiaire du moteur, des rouleaux (109) de sertissage,
- on sertit de façon continue l'extrémité basse de la paroi du cylindre sur l'extrémité haute de la paroi du couvercle.

10. Procédé selon la revendication 9, **caractérisé en ce qu'**il comprend l'étape
- on impose aux rouleaux un mouvement oscillant radialement par rapport à un axe (C) du support.

11. Procédé selon la revendication 10, **caractérisé en ce qu'**il comprend l'étape
- on impose aux rouleaux un mouvement oscillant radialement par rapport à l'axe (C) du support, par l'intermédiaire d'un excentrique (118) entraîné par un engrenage (110).

12. Procédé selon l'une des revendications 9 à 11, **caractérisé en ce qu'**il comprend l'étape
- on sertit l'extrémité basse de la paroi du cylindre sur l'extrémité haute de la paroi du couvercle en appliquant successivement des rouleaux (109A) munis d'un premier angle d'attaque (114A), et des rouleaux (1098) munis d'un second angle d'attaque (114B), le premier angle d'attaque étant supérieur au deuxième angle d'attaque.

## Claims

1. Device (100) for assembling a pneumatic booster (200), comprising
- a fixed cylindrical support (101) whose internal volume (102) is greater than the volume of a cover (203) of the booster, the cover being housed in the support,
- a cylindrical cap (104) whose internal volume (107) is greater than the volume of a cylinder (206) of the booster, said cap imposing an axial load on the cylinder, **characterized in that** it comprises
- at least one set of rollers (1 09A, 109B), rotated by a motor, the rollers rotating at least partially about the support.

2. Device according to Claim 1, **characterized in that** it is furnished with a first set of rollers (109A) and a second set of rollers (109B), the two sets of rollers rotating at least partially about the support.

3. Device according to one of Claims 1 or 2, **characterized in that** it is furnished with a center positioner (106) lying on an upper end (103) of the fixed support, the cover lying on the center positioner, the center positioner having a ring shape, an internal diameter of the center positioner being approximately equal to a diameter of the booster cover.

4. Device according to one of Claims 2 to 3, **characterized in that** the first and second rollers are alternated.

5. Device according to one of Claims 2 to 4, **characterized in that** the first set of rollers is furnished with three rollers, and **in that** the second set of rollers is furnished with three rollers, the first rollers being spaced at 120° from one another, and being spaced at 60° from the second rollers.

6. Device according to one of Claims 2 to 5, **characterized in that** the first rollers are furnished with a bevel (113A), said bevel having an angle of attack (114A) lying between 115 and 135°, and **in that** the second rollers are each furnished with a bevel (113B), said bevel having an angle of attack (114B) lying between 80 and 90°.

7. Device according to Claim 6, **characterized in that** the angle of attack of the bevels of the first rollers is 120°, and **in that** the angle of attack of the bevels of the second rollers is 85°.

8. Device according to one of Claims 2 to 7, **characterized in that** it is furnished with a gearing element (110) driving the rollers in rotation, and **in that** the gearing element is furnished with two gear wheels, a number of teeth of a first gear wheel (111) of the gearing element, driving in rotation the two sets of rollers about the booster, being different from a number of teeth of a second gear wheel (112) of said gearing element, the second wheel imposing by means of an eccentric (118) an oscillating radial movement of the rollers relative to an axis (C) of the support.

9. Method of swaging a booster, comprising the steps
- a cover (203) of a booster (200) is inserted into a support (101) of a swaging device (100), a top end (204) of a wall (205) of the cover resting on a top end (103) of an internal wall of the support,
- a cylinder (206) of the booster is placed on the cover, a bottom end (208) of a wall (209) of the cylinder resting on the top end of the wall of the cover,
- a cap (104) of the swaging device is placed on the support, a bottom end (108) of the cap compressing the bottom end of the wall of the cylinder onto the top end of the wall of the cover, **characterized in that** it comprises the following complementary steps
- a motor is actuated,
- the swaging rollers (109) are made to rotate about the booster, by means of the motor,
- the bottom end of the wall of the cylinder is swaged continuously onto the top end of the wall of the cover.

10. Method according to Claim 9, **characterized in that** it comprises the step
- the rollers are made to make a radially oscillating movement relative to an axis (C) of the support.

11. Method according to Claim 10, **characterized in that** it comprises the step
- the rollers are made to make a radially oscillating movement relative to the axis (C) of the support, by means of an eccentric (118) driven by a gearing element (110).

12. Method according to one of Claims 9 to 11, **characterized in that** it comprises the step
- the bottom end of the wall of the cylinder is swaged onto the top end of the wall of the cover by successively applying the rollers (109A) furnished with a first angle of attack (114A) and rollers (109B) furnished with a second angle of attack (114B), the first angle of attack being greater than the second angle of attack.

## Patentansprüche

1. Vorrichtung (100) für die Montage eines pneumatischen Servomotors (200), mit
- einem festen, zylindrischen Halter (101), bei dem ein Innenvolumen (102) größer ist als ein Volumen eines Deckels (203) des Servomotors, wobei der Deckel im Halter angeordnet ist,
- einem zylindrischen Aufsatz (104), bei dem ein Innenvolumen (107) größer ist als ein Volumen eines Zylinders (206) des Servomotors, wobei der Aufsatz dem Zylinder eine axiale Belastung auferlegt,
**dadurch gekennzeichnet, dass** sie folgendes aufweist:
- mindestens einen Satz Walzen (109A, 109B), die von einem Motor in Drehung versetzt werden, wobei sich die Walzen zumindest teilweise um den Halter drehen.

2. Vorrichtung nach Anspruch 1, **dadurch gekennzeichnet, dass** sie mit einem ersten Satz Walzen (109A) und mit einem zweiten Satz Walzen (109B) ausgestattet ist, wobei sich die beiden Walzensätze zumindest teilweise um den Halter drehen.

3. Vorrichtung nach Anspruch 1 oder 2, **dadurch gekennzeichnet, dass** sie mit einer Zentriereinrichtung (106) versehen ist, die auf einem oberen Ende (103) des festen Halters aufliegt, wobei der Deckel auf der Zentriereinrichtung aufliegt, die Zentriereinrichtung eine Ringform aufweist und ein Innendurchmesser der Zentriereinrichtung etwa einem Durchmesser des Deckels des Servomotors entspricht.

4. Vorrichtung nach Anspruch 2 oder 3, **dadurch gekennzeichnet, dass** die ersten und zweiten Walzen abwechselnd angeordnet sind.

5. Vorrichtung nach einem der Ansprüche 2 bis 4, **dadurch gekennzeichnet, dass** der erste Walzensatz mit drei Walzen versehen ist und der zweite Walzensatz mit drei Walzen versehen ist, wobei die ersten Walzen in einem Winkel von 120° voneinander beabstandet sind und in einem Winkel von 60° von den zweiten Walzen beabstandet sind.

6. Vorrichtung nach einem der Ansprüche 2 bis 5, **dadurch gekennzeichnet, dass** die ersten Walzen mit einer Abschrägung (113A) versehen sind, wobei die Abschrägung einen Angriffswinkel (114A) zwischen 115° und 135° aufweist, und dass die zweiten Walzen jeweils mit einer Abschrägung (113B) versehen sind, wobei die Abschrägung einen Angriffswinkel (114B) zwischen 80° und 90° aufweist.

7. Vorrichtung nach Anspruch 6, **dadurch gekennzeichnet, dass** der Angriffswinkel der Abschrägungen der ersten Walzen 120° und der Angriffswinkel der Abschrägungen der zweiten Walzen 85° beträgt.

8. Vorrichtung nach einem der Ansprüche 2 bis 7, **dadurch gekennzeichnet, dass** sie mit einem Getriebe (110) versehen ist, das die Walzen in Drehung versetzt, und dass das Getriebe mit zwei Zahnrädern versehen ist, wobei sich eine Anzahl der Zähne eines ersten Zahnrads (111) des Getriebes, das die beiden Walzensätze in Drehung um den Servomotor versetzt, von einer Anzahl der Zähne eines zweiten Zahnrads (112) des Getriebes unterscheidet, wobei das zweite Rad über einen Exzenter (118) eine radiale Schwingungsbewegung der Walzen bezüglich einer Achse (C) des Halters erzwingt.

9. Verfahren zum Verstemmen eines Servomotors, das die Schritte umfasst, bei denen:
- ein Deckel (203) eines Servomotors (200) in einen Halter (101) einer Verstemmvorrichtung (100) eingesetzt wird, wobei ein oberes Ende (204) einer Wand (205) des Deckels auf einem oberen Ende (103) einer Innenwand des Halters aufliegt,
- ein Zylinder (206) des Servomotors auf den Deckel aufgesetzt wird, wobei ein unteres Ende (208) einer Wand (209) des Zylinders auf dem oberen Ende der Wand des Deckels aufliegt,
- ein Aufsatz (104) der Verstemmvorrichtung auf den Halter aufgesetzt wird, wobei ein unteres Ende (108) des Aufsatzes das untere Ende der Wand des Zylinders auf das obere Ende der Wand des Deckels drückt,
**dadurch gekennzeichnet, dass** es die folgenden zusätzlichen Schritte umfasst:
- ein Motor wird betätigt,
- Verstemmwalzen (109) werden über den Motor um den Servomotor gedreht,
- das untere Ende der Wand des Zylinders wird durchgehend auf das obere Ende der Wand des Deckels verstemmt.

10. Verfahren nach Anspruch 9, **dadurch gekennzeichnet, dass** es den Schritt umfasst, bei dem
- den Walzen eine zu einer Achse (C) des Halters radiale Schwingungsbewegung auferlegt wird.

11. Verfahren nach Anspruch 10, **dadurch gekennzeichnet, dass** es den Schritt umfasst, bei dem
- den Walzen über einen Exzenter (118), der von einem Getriebe (110) angetrieben wird, eine zur Achse (C) des Halters radiale Schwingungsbewegung auferlegt wird.

12. Verfahren nach einem der Ansprüche 9 bis 11, **dadurch gekennzeichnet, dass** es den Schritt umfasst, bei dem
- das untere Ende der Wand des Zylinders auf das obere Ende der Wand des Deckels verstemmt wird, indem nacheinander Walzen (109A), die mit einem ersten Angriffswinkel (114A) versehen sind, und Walzen (109B), die mit einem zweiten Angriffswinkel (114B) versehen sind, aufgebracht werden, wobei der erste Angriffswinkel größer ist als der zweite Angriffswinkel.
